# EUROPEAN PATENT APPLICATION

(11) **EP 0 760 203 A1**
(43) Date of publication of application: **05.03.1997**
(21) Application number: 96903007.1
(22) Date of filing: 27.02.1996
(51) Int. Cl.: A01K 5/02

(54) **REGULATING SILO FOR FEEDING CATTLE**

(30) Priority: 16.03.1995 ES 9500697 U
(71) Applicant: Ballestin Prieto, Jesus, 50100 La Almunia de dona Godina (ES)
(72) Inventor: Ballestin Prieto, Jesus, 50100 La Almunia de dona Godina (ES)
(74) Representative: Perez Bonal, Bernardo
(86) International application number: ES9600038
(87) International publication number: WO9628016

(57) **Abstract**

The regulating silo for grain and/or meal is comprised of a product inlet mounth, a worm actuated by a small d.c. motor and a conical part terminated by a tube adjusted to be outer portion of the worm and intended to discharge the feed product to the trough, as well as optionally a water electrovalve for a sprinkling circuit.

## Description

### OBJECT OF THE INVENTION

The invention object of this specification refers to a silo of the type normally used to feed cattle kept either at stables or outside them, specially for granulated foodstuff products even when it is also used to manufacture flours and, more specifically within livestock feeding applications, to feed pig livestock, even though other applications are not ruled out.

It incorporates an intake opening through which the product is loaded up, a worm drive actuated by a D.C. powered motor and a tapered part ending at a pipe, fitted to the outside of the worm drive, used to unload the foodstuffs to the livestock being fed.

It does also optionally include an electrically operated water valve for a sprinkler circuit.

### BACKGROUND OF THE INVENTION

The incidence of labour costs upon total cattle and livestock rising and fattening costs are so high in industrialized countries that keeping livestock within stables is not enough to ensure that neither those facilities nor this primary industry as a whole are capable of generating a profitable return.

On the other hand, the need to fatten pregnant female livestock is so high that, whenever a farm does simultaneously keep a high number of them, it is then also equally necessary to maintain a similarly high number of staff in order to actuate the opening and closing valves used to operate the hoppers normally used or, alternatively, to leave a long period of time between any such operation and the next one, should the number of operational staff be reduced.

If to all the above is then added the incorporation of differing amounts of water to the foodstuff, the feeding differences existent between different livestock breeds, the different feeding prescriptions ordered by the attending veterinary surgeon, the pregnancy status of female animals or the feeding rates corresponding to the different ages of the animals, etc. it may then be easily understood that these livestock management mechanisms are fairly complex and do require the performance of multiple scheduling effected with the sufficient level of anticipation.

Notwithstanding the foregoing, the already outdated criteria of aligning in an individual fashion for each animal hoppers that pour into a feeder and which are manually regulated by butterfly valves arranged below the hopper, are nevertheless stubbornly maintained.

### DESCRIPTION OF THE INVENTION

The invention herein advanced takes into account all of the above different feeding possibilities, including the incorporation or exclusion of water or its differing grading, and does furthermore allow fine foodstuff regulation, using simple and sufficiently well known means and also incorporating modifications to the design of the hoppers that are appropriate for the achievement of the above results.

To this end it incorporates a multiplicity of parallelly aligned silos, that are fed by a worm drive or another type of commonly used conveying mean, so that the granulated inlet opening is arranged below the cradle of the worm drive, forming a wide round sector through which the granulated or flour does fall continuously, as the propelling screw of the worm screw device advances, so that each silo is filled up only whenever the respective previously aligned silo has been filled fully.

The lower portion of this inlet opening extends, through the use of a vertically arranged tubular conduit of a length which is variable as a function of length of the silo, so that the different silo length becomes the first step for the general regulation of the supply volume, arranged in groups and featuring a greater length of their respective inlet conduits those silos that lead to the feeding troughs of the animals with the greater feeding needs and viceversa.

Axially arranged in respect of the shaft of the cylinder of each silo there is a worm screw, featuring an extended shaft, so that at one end it engages a motor located within the silo itself and placed near the granulate feeding channel, such motor being supplied by low voltage electrical power, such as for instance 12 or 24 V power, in order to prevent dangerous electric shocks.

The other end of the extended shaft of the worm screw is that which is fitted with the propelling screw and which supplies foodstuff to the trough from which the animal feeds.

The discharge element is a hopper located below upon which slanted walls is deposited the solid feed, ending at a round section tubular conduit with a cross sectional diameter which is exactly that which allows the passage of the propelling screw fitted to the shaft and the foodstuff discharge, caused by the turning motion of the previously described propelling screw.

Using this arrangement there is no granulate or flour weight exerted upon the shaft, other than the minimal weight that is deposited upon the thread of the propelling screw, so that it cnveys the foodstuff, feeding it into the discharge hopper with a minimal level of power consumption, in accordance with the reload possibilities of the available power storage batteries.

An electrically operated valve, optionally arranged below the silo and outside the hopper, featuring a pipe attached to its slanted walls, feeds water directly to the thus generated internal space which, at its lower arrangement, does then become a round outlet head fitted with a multiplicity of supply holes through which water is sprinkled, in order to mix it with the granulate or flour, wetting it and covering thus the water needs of the corresponding animal.

Additionally, this electrical arrangement used to supply the worm screw of each silo, which is separate from the electric power installation used to supply the worm screw which purpose is to supply the silos themselves, makes it then possible to control the facility as a whole, independently by silo blocks and singly in respect of them, being it enough for this purpose to arrange a single line of orders, to trigger the motors and the actuators of the electrically operated valves, so that the whole assembly may then be controlled using a microprocessor capable of being externally installed, within the farm premises.

Besides being it possible to regulate the granulate or flour volume of each dosis, it is also possible to regulate the spindle motor turning speed, basically set so that a turn, at the standard distance between the threads of the propelling screw allow the passage of 23 g of granulate, changing this dosis as a function fo the type of granulate of flour and the size of the propelling screw.

### DESCRIPTION OF THE DRAWINGS

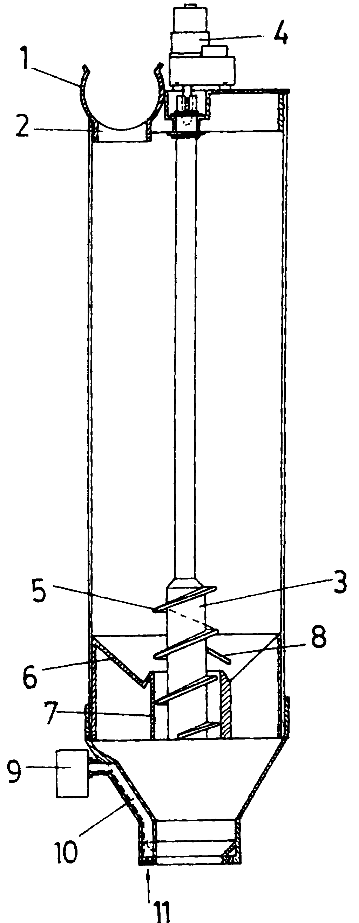

In order to complement the description made herein, and so as to aid the better and easier understanding of the features of the invention, this patent specification includes, as an integral part thereof, a single drawing where the following has been duly represented with a merely illustrative but not limitative character:

The single drawing is a cross sectional elevation view of the silo, showing the devices and arrangements object of this invention.

### PREFERRED EXECUTION OF THE INVENTION

Upon inspecting these duly commented figures it may be observed that the invention advanced herein consists of a silo of the parallelly aligned type, of the kind used to feed livestock, whether kept inside or outside stables, and which are fitted with a commonly serving worm screw or filling conveyance line, as well as manually supplied, incorporated together with their respective piping in clips (1) so that the granulate or flour inlet opening is arranged below the craddle of the worm screw, forming a wide circular sector (2) through which the granulate falls continuously, as the worm screw propelling screw advances, so that each silo is filled up only when the respective previously aligned silo is totally full, characterized by setting the height of the silo itself as the first general regulation of the product supply volume, whereas the shaft of the silo incorporates a worm drive (3) with telescopic shaft or otherwise, engaged to a low voltage electric motor (4) and fitted at its opposite end with a propelling screw (5) used to supply the feed trough where the corresponding animal feeds.

The weight discharge element is a lowerly arranged hopper (6) upon which walls the solid foodstuff is duly deposited, ending at a circular cross section tubular conduit (7) which diameter is exactly that which allows the passage of the propelling screw (5) and the discharge of the foodstuff, where the only product weight upon the shaft is the minimum amount deposited upon the thread of the propelling screw (5), so that it is this device which conveys the foodstuff, feeding it into the discharge hopper using a minimal power supply consumption, fully in accordance with the reload possibilities of the available power storage batteries, further aided by the action of a removal arm.

An optional electrically operated valve (9), located outside the hopper (6), featuring a pipe (10), feeds water through a round shaped outlet head (11) fitted with water sprinkling supply holes, which water mixes with the granulate or flour and in which an externally located microprocessor makes it then possible to control the facility as a whole, by silo blocks and also, singly through a single line of orders, used to trigger or regulate the speed of the motors and also, as required, the actuators of the electrically operated valves.

It is not considered necessary to extend this description any further in order to enable any expert in the matter to understand the scope of the invention and the advantages derived therefrom, as well as to be capable of reproducing it.

It must always be clearly understood that, as long as the essentiality of the invention is not altered, both the materials used, as well as the shape, size and arrangement of the elements herein described are open to variations within the same characteristic features.

The terms used during the description, as well as its sense must always be considered in a non limitative manner.

## Claims

1. Regulating silo for feeding cattle, of the parallelly aligned arrangement type, of the kind used to feed livestock, whether kept inside or outside stables, and which are fitted with a commonly serving worm screw or filling conveyance line, as well as manually supplied, incorporated together with their respective piping in clips (1) so that the granulate or flour inlet opening is arranged below the craddle of the worm screw, forming a wide circular sector (2) through which the granulate falls continuously, as the worm screw propelling screw advances, so that each silo is filled up only when the respective previously aligned silo is totally full, essentially characterized by setting the height of the silo itself as the first general regulation of the product supply volume, whereas the shaft of the silo incorporates a worm drive (3) with telescopic shaft or otherwise, engaged to a low voltage electric motor (4) and fitted at its opposite end with a propelling screw (5) used to supply the feed trough where the corresponding animal feeds, where the weight discharge element is a lowerly arranged hopper (6) upon which walls the solid foodstuff is duly deposited, ending at a circular cross section tubular conduit (7) which diameter is exactly that which allows the passage of the propelling screw (5) and the discharge of the foodstuff, where the only product weight upon the shaft is the minimum amount deposited upon the thread of the propelling screw (5), so that it is this device which conveys the foodstuff, feeding it into the discharge hopper using a minimal power supply consumption, fully in accordance with the reload possibilities of the available power storage batteries, further aided by the action of a removal arm (8).

2. Regulating silo for feeding cattle, according to the previous claim, characterized by its being fitted with an electrically operated valve (9), located outside the hopper (6), featuring a pipe (10), feeds water through a round shaped outlet head (11) fitted with water sprinkling supply holes, which water mixes with the granulate or flour and in which an externally located microprocessor makes it then possible to control the facility as a whole, by silo blocks and also, singly through a single line of orders, used to trigger or regulate the speed of the motors and also, as required, the actuators of the electrically operated valves.
